# EUROPÄISCHE PATENTSCHRIFT

(11) **EP 2 490 284 B1**
(45) Veröffentlichungstag und Bekanntmachung des Hinweises auf die Patenterteilung: **30.09.2015**
(21) Anmeldenummer: 11178969.9
(22) Anmeldetag: 26.08.2011
(51) Int. Cl.: H01M 4/04, C25D 15/00, C25D 15/02, C25D 9/06, C25D 9/08

(54) **Elektroden für Batterien, insbesondere für Lithium-Ionen-Batterien, und ihre Herstellung**
Electrodes for batteries, in particular lithium-ion batteries, and their production
Electrodes pour batteries, notamment pour batteries lithium-ion et leur fabrication

(30) Priorität: 16.02.2011 DE 102011004233
(43) Veröffentlichungstag der Anmeldung: 22.08.2012
(73) Patentinhaber: VARTA Micro Innovation GmbH, 8010 Graz (AT)
(72) Erfinder: Schmuck, Dr. Martin, 8010 Graz (AT); Fuchsbichler, Bernd, 8605 Kapfenberg (AT)
(74) Vertreter: Patentanwälte Ruff, Wilhelm, Beier, Dauster & Partner

(56) Entgegenhaltungen:
- EP-A1- 1 295 968
- WO-A1-2009/012899
- WO-A2-02/01656
- JP-A- 62 165 869
- US-A- 5 041 199

## Beschreibung

Die vorliegende Erfindung betrifft ein Verfahren zur Herstellung von Elektroden für Batterien, insbesondere für Lithium-lonen-Batterien. Des Weiteren betrifft die Erfindung gemäß dem Verfahren hergestellte oder herstellbare Elektroden sowie Zellen oder Batterien mit solchen Elektroden.

Der Begriff "Batterie" meinte ursprünglich mehrere in Serie geschaltete galvanische Zellen in einem Gehäuse. Heute werden auch einzelne galvanische Zellen häufig als Batterie bezeichnet. Bei der Entladung einer galvanischen Zelle findet eine energieliefernde chemische Reaktion statt, welche sich aus zwei elektrisch miteinander gekoppelten aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden Ionenstrom innerhalb der Zelle. Dieser wird durch einen ionisch leitenden Elektrolyten gewährleistet. In sekundären Zellen und Batterien ist diese Entladereaktion reversibel. Werden in diesem Zusammenhang die Begriffe Anode und Kathode benutzt, benennt man die Elektroden in der Regel entsprechend ihrer Entladefunktion. Die negative Elektrode ist in solchen Zellen folglich die Anode (Oxidation), die positive Elektrode die Kathode (Reduktion).

Unter den bekannten sekundären Zellen und Batterien werden vergleichsweise hohe Energiedichten insbesondere von Lithium-lonen-Batterien erreicht. Diese Batterien weisen in der Regel Kompositelektroden auf, die neben elektrochemisch aktiven auch elektrochemisch inaktive Materialien umfassen. Als elektrochemisch aktive Materialien für Lithium-lonen-Batterien kommen grundsätzlich sämtliche Materialien in Frage, die Lithium-lonen aufnehmen und wieder abgeben können. Stand der Technik sind diesbezüglich für die negative Elektrode insbesondere Partikel auf Kohlenstoffbasis wie graphitischer Kohlenstoff oder zur Interkalation von Lithium befähigte nicht-graphitische Kohlenstoffmaterialien. Weiterhin können auch metallische und halbmetallische Materialien eingesetzt werden, die mit Lithium legierbar sind. Beispielsweise sind die Elemente Zinn, Antimon und Silizium in der Lage, mit Lithium intermetallische Phasen zu bilden. Sämtliche elektrochemisch aktiven Materialien sind in der Regel in Partikelform in den Elektroden enthalten.

Als elektrochemisch inaktive Materialien sind zunächst Elektrodenbinder und Stromableiter zu nennen. Über Stromableiter werden Elektronen aus den Elektroden zu- oder abgeführt. Elektrodenbinder sorgen für die mechanische Stabilität der Elektroden sowie für die Kontaktierung der Partikel aus elektrochemisch aktivem Material untereinander und zum Stromableiter. Zu einer verbesserten elektrischen Anbindung der elektrochemisch aktiven Partikel an den Stromableiter können darüber hinaus leitfähigkeitsverbessernde Additive beitragen. Sämtliche elektrochemisch inaktiven Materialien sollten zumindest im Potentialbereich der jeweiligen Elektrode elektrochemisch stabil sein und einen chemisch inerten Charakter gegenüber gängigen Elektrolytlösungen aufweisen.

Die Lithiierung von Aktivmaterialien auf Kohlenstoffbasis ist in aller Regel mit einer deutlichen Volumenzunahme verbunden. So kann das Volumen einzelner Partikel bei der Aufnahme von Lithium-lonen bis zu 10 % zunehmen. Noch größer ist diese Volumenzunahme bei den metallischen und halbmetallischen Speichermaterialien. Zwar weisen diese gewöhnlich eine erheblich höhere Speicherfähigkeit auf als Materialien auf Kohlenstoffbasis. Doch ist, beispielsweise bei der Lithiierung von Zinn, Antimon und Silizium, auch die volumetrische Ausdehnung meist deutlich größer (im ersten Ladezyklus bis zu 300 %). Bei der Auslagerung von Lithium-lonen schrumpft das Volumen der jeweiligen Aktivmaterialien wieder und es kommt zu Spannungen innerhalb der Partikel aus Aktivmaterial sowie gegebenenfalls zu einer Verschiebung der Elektrodenstruktur. Die damit einhergehende mechanische Beanspruchung der Elektroden führt zum Teil in erheblichem Ausmaß zu Kontaktverlusten zwischen benachbarten Partikeln aus Aktivmaterial. Dekontaktierungen sind häufig mit schleichenden Kapazitätsverlusten verbunden, welche zu einer Unbrauchbarkeit der betroffenen Elektrode führen können.

Bei aus dem Stand der Technik bekannten Verfahren zur Herstellung von Elektroden für Lithium-lonen-Batterien wird üblicherweise ein pastenförmiges Elektrodenmaterial umfassend die oben genannten elektrochemisch aktiven und inaktiven Materialien auf einen geeigneten Stromableiter aufgebracht, beispielsweise in einem Walz- oder Rakelprozess. Die Paste wird meist in einer dünnen Schicht auf den Ableiter aufgebracht und anschließend einer Wärmebehandlung unterzogen. Zur Verbesserung der elektrochemischen Eigenschaften der aufgebrachten Elektrodenschicht kann die entstehende Schicht unter Druck komprimiert werden, beispielsweise mittels Walz-, Press- oder Kalandrierprozessen. Diese Druckbehandlung bewirkt meist eine verbesserte Kontaktierung der Partikel aus Aktivmaterial untereinander sowie an den Stromkollektor.

Gemäß der WO 2009/012899 A1 erfolgt die Herstellung von Elektroden für Lithium-lonen-Batterien bevorzugt aus einer wasserbasierten Paste enthaltend ein Zellulosederivat als Binder sowie als elektrochemisch aktive Materialien dispergierte Partikel aus mit Lithium legierbaren Metallen oder Halbmetallen sowie Graphitpartikel. So hergestellte Elektroden zeigen ein gutes Zyklisierverhalten. Trotz der großen Volumenausdehnung, welche die metallischen oder halbmetallischen Speichermaterialien während der Lithiierung erfahren, scheinen die Kontaktverluste zwischen benachbarten Partikeln aus Aktivmaterial bei diesen Elektroden nur in verringertem Maß aufzutreten.

Dabei ist allerdings problematisch, dass Zellulosederivate häufig ein vergleichsweise sprödes und kaum elastisches Verhalten zeigen, welches sich meist negativ auf die Prozessierbarkeit der Elektroden auswirkt und damit insbesondere auf die Kontaktierung an den Stromkollektor. Dieses Verhalten erfordert in der Regel den Einsatz von Weichmachern, die der erwähnten Paste zugesetzt werden können.

Elektroden können weiterhin auch durch Abscheidung aus einer Lösung hergestellt werden. So ist beispielsweise in der JP 62 165869 A die Herstellung einer Gasdiffusionselektrode für eine Brennstoffzelle beschrieben, wobei es zu einer Abscheidung von ultrafeinen Nickelpartikeln aus einer wässrigen Lösung eines Cellulosebinders bei sehr hohen Spannungen (100 V) kommt. Die Partikel bilden auf der Gasdiffusionselektrode eine feine poröse Schicht, die bei der späteren Verwendung der Elektrode Elektrolytleckagen verhindern soll.

Die WO 02/01656 A2 betrifft die Herstellung von Verbundelektroden für Lithium-Batterien. Hierbei können aktive Massen zusammen mit einem Matrixmetall auf einem Substrat abgeschieden werden.

Aus der EP 1 295 968 A1 ist ein Verfahren zur Herstellung einer Gasdiffusionselektrode bekannt, die als Sauerstoffkathode bei der ChloralkaliElektrolyse dienen soll. Hierbei wird ein leitfähiges Basismaterial mittels Elektrophorese mit einer reaktiven Schicht überzogen.

Aus der US 5041199 A ist die Herstellung von Elektroden für elektrochemische Zellen mittels Abscheidung aus einem galvanischen Bad bekannt. Als Elektrolyt kann hierbei ein Lösung eines ionischen Harzes oder eines Tensids zum Einsatz kommen.

Der vorliegenden Erfindung lag die Aufgabe zugrunde, Elektroden für Batterien, insbesondere Lithium-lonen-Batterien, bereitzustellen, welche eine verbesserte kapazitive Leistungsfähigkeit bei fortschreitendem Alter aufweisen, insbesondere durch eine verbesserte Kontaktierung des Elektrodenaktivmaterials mit dem Stromableiter.

Diese Aufgabe wird gelöst durch das Verfahren mit den Merkmalen des Anspruchs 1. Bevorzugte Ausführungsformen des erfindungsgemäßen Verfahrens sind in den abhängigen Ansprüchen 2 bis 11 angegeben.

Wie bei aus dem Stand der Technik bekannten Verfahren zur Herstellung von Elektroden für Lithium-lonen-Batterien wird auch beim erfindungsgemäßen Verfahren eine Mischung umfassend Partikel aus mindestens einem elektrochemisch aktiven Material, einen Binder und ein Lösungsmittel und/oder Dispergiermittel verwendet. Im Gegensatz zu den bekannten Verfahren wird die Mischung aber nicht einfach auf mechanischem Weg verarbeitet. Stattdessen zeichnet sich das erfindungsgemäße Verfahren dadurch aus, dass die Elektroden elektrochemisch aus der Mischung abgeschieden werden. Gebildet werden sie durch elektrochemische Abscheidung der Partikel aus dem mindestens einen aktiven Material und dem Binder auf einem elektrisch leitfähigen Substrat

Im Allgemeinen werden für die technische Durchführung einer elektrochemischen Abscheidung neben einem Elektrolyten mindestens zwei Elektroden sowie eine äußere Spannungsquelle benötigt. Beim Anlegen einer Spannung wandern im Elektrolyten enthaltene Kationen zur negativen Elektrode und enthaltene Anionen zur positiven Elektrode. An den Elektroden kommt es unter Aufnahme oder Abgabe von Elektronen zur reduktiven oder oxidativen Abscheidung von Stoffen. Als Elektrolyt dient vorliegend die Mischung umfassend die Partikel aus dem elektrochemisch aktiven Material, den Binder und das Lösungs- und/oder Dispergiermittel, die später noch detaillierter beschrieben wird.

Es ist bevorzugt, dass es sich bei dem elektrisch leitfähigen Substrat, auf welchem die Elektroden abgeschieden werden, um einen Stromableiter handelt, insbesondere einen Stromableiter, wie er üblicherweise für Elektroden von Lithium-lonen-Batterien verwendet wird. Das elektrisch leitfähige Substrat kann prinzipiell aus einem beliebigen, leitfähigen Material bestehen, so lange es unter den elektrochemischen Bedingungen des Abscheideprozesses inert ist. Bevorzugt besteht es aus einem Metall oder aus einer Metalllegierung. Bei der Herstellung von Lithium-lonen-Batterien sind Aluminium und Kupfer besonders bevorzugt. In der Regel wird ein Aluminiumsubstrat als Stromableiter für positive und Kupfer als Stromableiter für negative Elektroden eingesetzt.

Das elektrisch leitfähige Substrat wird bevorzugt direkt in die Mischung getaucht und zur Durchführung der Abscheidung mit einer Spannungsquelle verbunden. In Abhängigkeit von den in der Mischung enthaltenen Komponenten kann es bevorzugt sein, das elektrisch leitfähige Substrat entweder als Kathode oder als Anode zu schalten und so eine kathodische bzw. anodische Abscheidung auf dem Substrat durchzuführen. Als Gegenelektrode kann in beiden Fällen z.B. eine Kupferelektrode, insbesondere eine Kupferstreckmetall-Elektrode, verwendet werden.

Unabhängig davon, was für ein elektrisch leitfähiges Substrat verwendet wird, ermöglicht der Weg der elektrochemischen Abscheidung die Bildung von schichtartigen Elektroden mit sehr gleichmäßiger Dicke.

Das elektrisch leitfähige Substrat kann grundsätzlich jede beliebige Geometrie aufweisen. So können beispielsweise auch Ableiter mit komplexer dreidimensionaler Struktur, wie sie z.B. bei einem Vlies oder einem Filz auftritt, als Substrate herangezogen werden. Das strukturbildende Element sind bei derartigen Ableitern Fäden, Fasern und/oder Nadeln. Diese sind üblicherweise zu einem flächigen Gebilde verarbeitet, das zahllose Hohlräume zwischen den strukturbildenden Elementen aufweist. Auch poröse Festkörper wie Schäume (insbesondere metallische Schäume wie Nickelschäume, beispielsweise beschrieben in der DE 40 17 919 A1, der US 4251603 A und der EP 0 185 830 A1) kommen als Ableiter mit komplexer dreidimensionaler Struktur in Frage. Mittels herkömmlicher Verfahren (z.B. durch Rakeln) ist eine gleichmäßige Beschichtung solcher Ableiter mit Elektrodenmaterial nicht möglich. Somit ist meist auch eine zufriedenstellende Kontaktierung zwischen dem Elektrodenmaterial und solchen Substraten nur eingeschränkt realisierbar. Durch elektrochemische Abscheidung gemäß dem vorliegend beschriebenen Verfahren lässt sich dieses Problem lösen.

Die Geschwindigkeit der Abscheidung kann insbesondere durch gezielte Variation von Stromstärke, Spannung und Temperatur sowie durch chemische Modifikationen des Elektrolyten (z.B. Variation von Konzentration, Zusammensetzung und pH-Wert) beeinflusst werden. Eine weitere für elektrochemische Abscheidungen in aller Regel wichtige und direkt von den oben genannten Parametern abhängige Größe ist die Stromdichte. Sie ist definiert als das Verhältnis von Stromstärke zu durchflossener Fläche, innerhalb derer ein elektrischer Strom durchtritt. Neben der Abscheidegeschwindigkeit lassen sich durch diese Parameter auch die Dicke der abzuscheidenden Elektrodenschicht einstellen sowie ihre Qualität, insbesondere in Bezug auf die Homogenität, optimieren. Elektrochemische Abscheidungen gemäß dem erfindungsgemäßen Verfahren werden bevorzugt bei einer Stromdichte zwischen 1 mA/cm² und 30 mA/cm², besonders bevorzugt zwischen 2 mA/cm² und 10 mA/cm², durchgeführt. Die Spannung bei der Abscheidung liegt bevorzugt im Bereich zwischen 1 V und 10 V.

Die Temperatur der Mischung, aus der die Elektroden abgeschieden werden, wird bei der Abscheidung bevorzugt auf einen Wert zwischen 0,5 °C und 80 °C, insbesondere zwischen 20 °C und 50 °C, eingestellt.

Die Abscheidezeit, also der Zeitraum, in dem eine Spannung zum Abscheiden der Elektroden angelegt wird, wird bevorzugt auf einen Wert zwischen 5 s und 30 min, insbesondere zwischen 10 s und 10 min, eingestellt.

Die Bildung der Elektroden erfolgt bevorzugt durch elektrochemische Abscheidung aus wässrigem Medium. Das heißt, dass die Mischung als Lösungs- und/oder Dispergiermittel zumindest mehrheitlich Wasser umfasst. Gegebenenfalls kann sie zusätzlich einen Anteil an mindestens einem weiteren Lösungsmittel (wie z.B. einem Alkohol) aufweisen. Bevorzugt enthält sie als Lösungs- und/oder Dispergiermittel aber ausschließlich Wasser.

Das Lösungs- und/oder Dispergiermittel ist in der Mischung bevorzugt in einem Anteil zwischen 50 Gew.-% und 99 Gew.-%, besonders bevorzugt zwischen 75 Gew.-% und 95 Gew.-% (jeweils bezogen auf das Gesamtgewicht der Mischung), enthalten. Der Anteil an Lösungs- und/oder Dispergiermittel in der Mischung beträgt in der Regel ein Mehrfaches der Gesamtmenge der übrigen Komponenten.

Bei dem Binder in der erfindungsgemäß verwendeten Mischung handelt es sich um einen in Wasser prozessierbaren Binder. Es werden Binder verwendet, die in wässriger Lösung eine anionische oder kationische Natur aufweisen, sich also beim Anlegen einer Spannung in Richtung der Anode oder in Richtung der Kathode bewegen, oder sich in wässriger Lösung in Anionen oder Kationen überführen lassen, beispielsweise durch gezielte Variation des pH-Werts der Lösung. Besonders bevorzugt kommen als Binder im Rahmen der vorliegenden Erfindung polyanionische oder polykationische Binder zum Einsatz.

Aus stofflicher Sicht handelt es sich bei dem Binder um einen Binder auf Basis eines Polysaccharids. Polysaccharide sind Vielfachzucker mit Monosaccharideinheiten, wobei in der Regel eine statistische Molekülgrößenverteilung vorliegt. Mehrere Monosaccharide (z.B. Glukose oder Fruktose) bilden dabei eine Kette.

Als Binder für Elektroden geeignete Polysaccharide sind in der WO 2009/012899 A1 ausführlich beschrieben. Der Inhalt der WO 2009/012899 A1 wird hiermit durch Bezugnahme zum Inhalt dieser Beschreibung gemacht.

Bevorzugt wird als polysaccharidbasierter Elektrodenbinder im Rahmen der vorliegenden Erfindung ein mit reaktiven Gruppen modifiziertes Polysaccharid, insbesondere ein Zellulosederivat, eingesetzt. Bei Zellulose handelt es sich bekanntlich um ein unverzweigtes Polysaccharid, das in der Regel aus mehreren 100 bis 10.000 β-D-Glukose-Molekülen gebildet ist, letztere verknüpft über β-(1,4)-glykosidische Bindungen.

Bei den reaktiven Gruppen handelt es sich insbesondere um funktionelle Gruppen, die in einem polaren Lösungsmittel polarisierbar oder ionisierbar sind und/oder mit OH-Gruppen eine Kondensationsreaktion eingehen können. Bevorzugt handelt es sich bei den reaktiven Gruppen um Hydroxy-, Carboxyl-, Carboxylat-, Carbonyl-, Cyano-, Sulfonsäure-, Halogencarbonyl-, Carbamoyl-, Thiol- und/oder Amino-Gruppen.

In einer besonders bevorzugten Ausführungsform weist die in dem erfindungsgemäßen Verfahren eingesetzte Mischung als Binder Carboxyalkylzellulose, vorzugsweise Carboxymethylzellulose (CMC), insbesondere Natrium-Carboxymethylzellulose (Na-CMC), auf.

Carboxymethylzellulosen sind Zellulosederivate, bei denen mindestens ein Teil der OH-Gruppen als Ether mit einer Carboxymethyl-Gruppe verknüpft ist. Zur Herstellung von Carboxymethylzellulose wird gewöhnlich Zellulose in einem ersten Schritt in reaktive Alkalizellulose überführt und anschließend mit Chloressigsäure zur Carboxymethylzellulose umgesetzt. Die Zellulose-Struktur bleibt bei dieser Vorgehensweise erhalten. Insbesondere unter alkalischen Bedingungen sind Carboxyalkylzellulosen in der Regel relativ gut in Wasser als Polyanion löslich. Entsprechend können Carboxymethylzellulosen wie Na-CMC z.B. anodisch auf dem elektrisch leitfähigen Substrat abgeschieden werden.

Besonders bevorzugt wird in einem erfindungsgemäßen Verfahren als Binder Na-CMC mit einem Substitutionsgrad zwischen 0,5 und 3, bevorzugt zwischen 0,8 und 1,6, eingesetzt. Der Substitutionsgrad gibt die durchschnittliche Anzahl der modifizierten Hydroxylgruppen pro Monosaccharid-Einheit in einem Zellulosederivat an. Da in der Zellulose pro Monosaccharid-Einheit drei Hydroxylgruppen für eine Umsetzung zur Verfügung stehen, beträgt der maximal erreichbare Substitutionsgrad vorliegend 3.

In einer weiteren besonders bevorzugten Ausführungsform weist die in dem erfindungsgemäßen Verfahren eingesetzte Mischung als Binder Chitosan oder ein Chitosanderivat auf.

Chitosan ist ein natürlich vorkommendes Polyaminosaccharid, welches sich vom Chitin ableitet. Es weist üblicherweise eine lineare Struktur auf und setzt sich aus β-(1-4)-verknüpftem N-Acetyl-D-Glucosamin (2-Amino-2-desoxy-α/β-D-glucopyranose) und D-Glucosamin (deacetylierte 2-Amino-2-desoxy-α/β-D-glucopyranose) in zufälliger Verteilung zusammen. Es wird technisch in der Regel aus Chitin durch Deacetylierung gewonnen. Insbesondere unter sauren Bedingungen ist Chitosan meist relativ gut in Wasser als Polykation löslich. Entsprechend kann Chitosan kathodisch auf dem elektrisch leitfähigen Substrat abgeschieden werden.

Der Binder ist in der Mischung bevorzugt in einem Anteil zwischen 0,1 Gew.-% und 10,0 Gew.-%, insbesondere zwischen 0,2 Gew.-% und 3 Gew.-%, besonders bevorzugt zwischen 0,3 Gew.-% und 2 Gew.-%, enthalten.

Der Anteil des Binders in der Mischung kann maßgeblich ihre Viskosität beeinflussen und damit auch, in Verbindung mit den oben genannten Parametern, das Abscheideverhalten der Mischungsbestandteile. Während des Abscheideprozesses können als Anion oder Kation vorliegende Bindermoleküle ungeladene Mischungsbestandteile, beispielsweise die Partikel aus dem mindestens einen elektrochemisch aktiven Material, mit sich reißen. Auf dem als Kathode oder Anode geschalteten elektrisch leitfähigen Substrat lagern sich die Bindermoleküle ab und bilden eine dreidimensionale Struktur aus, in welche die Partikel aus dem mindestens einen elektrochemisch aktiven Material eingelagert sind. Damit ein möglichst homogene Elektrodenschicht auf dem leitfähigen Substrat resultiert, sollte sich der Anteil des Binders in der Mischung idealerweise innerhalb der oben genannten Bereiche bewegen, insbesondere, wenn es sich bei dem Binder um eines der erwähnten Monosaccharide handelt.

Grundsätzlich kann das erfindungsgemäße Verfahren sowohl zur Herstellung negativer als auch positiver Elektroden, insbesondere für Lithium-Ionen-Batterien, dienen. Je nach herzustellendem Elektrodentyp unterscheidet sich das eingesetzte elektrochemisch aktive Material.

Geeignete elektrochemisch aktive Materialien für negative Elektroden sind beispielsweise in der bereits erwähnten WO 2009/012899 ausführlich beschrieben. Als Partikel aus dem mindestens einen elektrochemisch aktiven Material kommen in diesem Fall insbesondere Partikel aus Lithium interkalierenden, kohlenstoffbasierten Materialien wie Graphit in Frage. Auch geeignete nicht-kohlenstoffbasierte Lithium interkalierende Materialien können im Rahmen der vorliegenden Erfindung verwendet werden. Geeignete kohlenstoffbasierte und nicht-kohlenstoffbasierte Lithium interkalierende Materialien sind dem Fachmann grundsätzlich bekannt und bedürfen keiner näheren Erläuterung.

Alternativ oder zusätzlich zu diesen Lithium interkalierenden Verbindungen können als Partikel aus dem mindestens einen elektrochemisch aktiven Material aber auch Partikel aus Metallen und/oder Halbmetallen, die mit Lithium legierbar sind, eingesetzt werden. Als mit Lithium legierbare Metalle und/oder Halbmetalle kommen insbesondere Aluminium, Silizium, Antimon und Zinn in Frage, die auch in Kombination verwendet werden können. Auch Kompositmaterialien aus den genannten Metallen und/oder Halbmetallen sowie den erwähnten kohlenstoffbasierten Materialien sind einsetzbar.

Die Partikel aus dem mindestens einen elektrochemisch aktiven Material weisen bevorzugt eine mittlere Partikelgröße zwischen 20 nm und 100 µm auf.

Als elektrochemisch aktive Materialien für positive Elektroden sind insbesondere Lithium-Metalloxid-Verbindungen oder Lithium-Metallphosphat-Verbindungen bevorzugt. Beispielsweise können Partikel aus einer Verbindung aus der Gruppe mit LiNi_{1/3}Mn_{1/3}Co_{1/3}O₂, LiCoO₂, LiMn₂O₄, LiFePO₄ und LiMnPO₄ verwendet werden.

Neben den bereits beschriebenen Komponenten enthält die Mischung bevorzugt mindestens ein die elektrische Leitfähigkeit in der herzustellenden Elektrode erhöhendes Additiv, insbesondere einen kohlenstoffbasierten Zusatz wie Kohlenstoffnanoröhrchen (CNTs) und/oder Ruß und/oder einen metallischen Zusatz. Solche Zusätze sind dem Fachmann bekannt und müssen im Rahmen der vorliegenden Anmeldung nicht näher erläutert werden.

Weiterhin kann die verwendete Mischung insbesondere noch einen Weichmacher, insbesondere einen Weichmacher esterartiger Natur wie Citronensäuretriethylester, enthalten. Unter Weichmachern esterartiger Natur sollen vorliegend Weichmacher aus organischen Verbindungen mit mindestens einer Estergruppe verstanden werden. Bevorzugt ist der Weichmacher in der Mischung in einem Anteil zwischen 0,5 Gew.-% und 5 Gew.-%, insbesondere zwischen 0,8 Gew.-% und 2 Gew.-%, enthalten.

In besonderen Ausführungsformen des erfindungsgemäßen Verfahrens schließt sich an die Abscheidung der Elektroden ein Schritt zur möglichst vollständigen Entfernung des in der abgeschiedenen Schicht enthaltenen Lösungs- und/oder Dispergiermittels an. Bei dem Schritt handelt es sich bevorzugt um eine Wärmebehandlung.

Zur Verbesserung der elektrochemischen Eigenschaften der durch elektrochemische Abscheidung gebildeten Elektrode kann es auch bevorzugt sein, die abgeschiedene Schicht aus dem Binder und dem elektrochemisch aktiven Material in einem Folgeschritt unter Druck mit dem leitfähigen Substrat zu kontaktieren. Dies kann beispielsweise im Rahmen eines Walz-, eines Press- oder eines Kalandrierschrittes erfolgen. Eine solche Druckbehandlung bewirkt meist eine bessere Kontaktierung der in der Schicht enthaltenen Partikel aus Aktivmaterial untereinander sowie an den Elektrodenableiter.

Bei den nach einem erfindungsgemäßen Verfahren hergestellten oder herstellbaren Elektroden handelt es sich insbesondere um Elektroden für Lithium-Ionen-Batterien. Zellen und/oder Batterien mit solchen Elektroden sind entsprechend bevorzugt Lithium-Ionen-Zellen und -Batterien. Die Elektroden umfassen ein als elektrischen Ableiter fungierendes elektrisch leitfähiges Substrat, wie es oben beschrieben wurde, sowie eine darauf abgeschiedene Schicht umfassend die beschriebenen Partikel aus dem elektrochemisch aktiven Material und einen der beschriebenen Binder.

Bevorzugt enthält die Elektrodenschicht auf dem elektrisch leitfähigen Substrat als Bestandteile
- zwischen 0,1 Gew.-% und 20 Gew.-%, bevorzugt zwischen 0,1 Gew.-% und 10 Gew.-%, insbesondere zwischen 0,1 Gew.-% und 3 Gew.-% des beschriebenen Binders,
- zwischen 20 Gew.-% und 95 Gew.-% der Partikel aus dem beschriebenen elektrochemisch aktiven Material,
- zwischen 0,1 Gew.-% und 10 Gew.-% des beschriebenen mindestens einen Leitfähigkeitsadditivs und
- zwischen 0,1 Gew.-% und 10 Gew.-% des beschriebenen mindestens einen Weichmachers,
wobei sich die Prozentangaben aller Komponenten bevorzugt auf 100 Gew.-% ergänzen.

In nach dem erfindungsgemäßen Verfahren hergestellten Elektroden bildet der Binder eine Matrix, in der die Partikel aus dem oder den elektrochemisch aktiven Materialien bevorzugt fein dispergiert und homogen verteilt vorliegen. Auf die Natur dieses Binders wurde bereits eingegangen. Auf die entsprechenden Ausführungen wird hiermit Bezug genommen und verwiesen.

Der Begriff "Matrix" soll dabei ein Material bezeichnen, in das Partikel aus einem oder mehreren weiteren Materialien, hier die Partikel aus den elektrochemisch aktiven Materialien sowie gegebenenfalls Additivpartikel (z.B. die elektrische Leitfähigkeit der herzustellenden Elektrode erhöhende Additive) eingebettet sind. Eine feste Bindung mit der Bindermatrix gehen die Partikel in der Regel nicht ein. Vielmehr erfolgt eine Anbindung meist physikalisch, z.B. über Adhäsionskräfte, oder mechanisch. Es ist aber auch möglich, dass die beschriebenen metallischen und halbmetallischen Partikel auf ihrer Oberfläche OH-Gruppen aufweisen wenn die Oberfläche zumindest teilweise oxidiert ist. Dieser Fall kann insbesondere dann vorliegen, wenn die Partikel in Kontakt mit Wasser gebracht wurden. Über diese OH-Gruppen kann eine kovalente Bindung insbesondere zu polysaccharidbasierten Elektrodenbindern wie Na-CMC oder dem erwähnten Chitosan gebildet werden, insbesondere durch eine Kondensationsreaktion unter Wasserabspaltung. Aus der kovalenten Bindung zwischen den Partikeln und der Matrix resultiert eine besonders feste und widerstandsfähige Elektrodenstruktur, die den eingangs erwähnten elektrodeninternen mechanischen Belastungen bei Ladungs- und Entladungsvorgängen hervorragend standhalten kann.

Besonders bevorzugt weisen nach dem erfindungsgemäßen Verfahren hergestellteElektroden als elektrisch leitfähiges Substrat einen Ableiter mit komplexer dreidimensionaler Struktur aus Fäden, Fasern und/oder Nadeln auf, wie sie oben beschrieben wurde. So kann der Ableiter beispielsweise aus dünnen Metallfäden bestehen. Besonders vorteilhaft lassen sich auch Fäden, Fasern und/oder Nadeln mit einem Kern aus Kunststoff und einer elektrisch leitfähigen Hülle, beispielsweise aus einem Metall, einsetzen. Alternativ kommen auch die erwähnten porösen Ableiter wie z.B. Schäume in Frage.

Weitere Merkmale der Erfindung ergeben sich aus der nun folgenden Beschreibung bevorzugter Ausführungsformen in Verbindung mit den Unteransprüchen. Hierbei können einzelne Merkmale jeweils für sich oder zu mehreren in Kombination miteinander einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### Figurenbeschreibung

- Fig. 1: zeigt ein Vlies aus kupferbeschichteten Kunststofffäden (SEM, 500-fache Vergrößerung), das in bevorzugten Ausführungsformen der vorliegenden Erfindung als elektrisch leitfähiges Substrat herangezogen wird.
- Fig. 2: zeigt eine Querschnittsaufnahme (SEM, 1000- und 1500-fache Vergrößerung) einer durch einen klassischen Rakelprozess hergestellten Elektrode.
- Fig. 3: zeigt eine Querschnittsaufnahme (SEM, 500- und 1000-fache Vergrößerung) einer durch elektrochemische Abscheidung gemäß der vorliegenden Erfindung hergestellten Elektrode.

### Beispiele

### (1) Anodische Abscheidung von Na-CMC

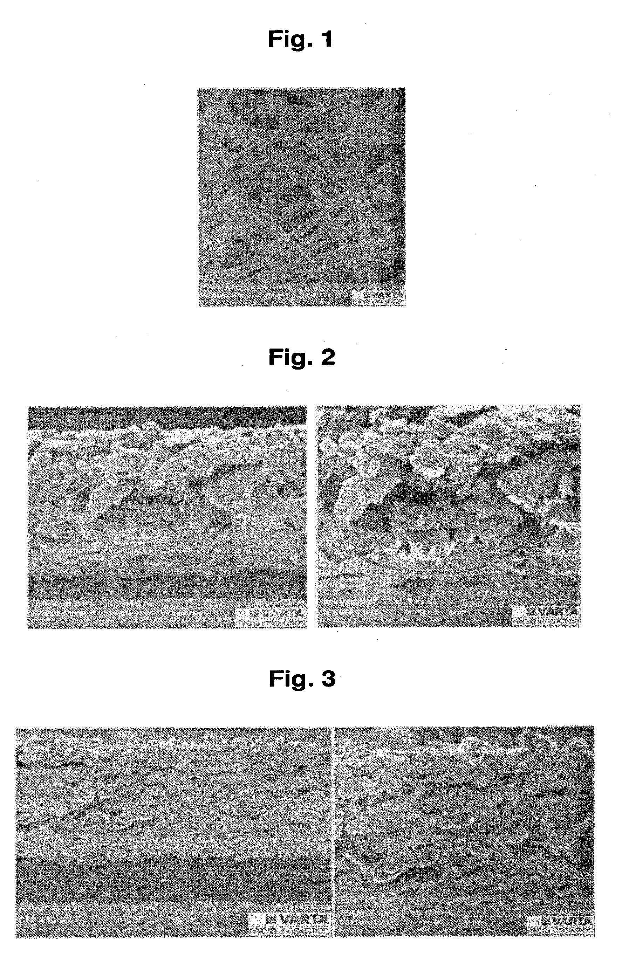

Im Folgenden wird die anodische Abscheidung von Elektroden aus Mischungen mit variierenden Bestandteilen beschrieben. Die Abscheidung erfolgte jeweils auf einen Kupferstromableiter (POLYMET^{®} XII-1 Cu, ein mit Kupfer beschichtetes Polyestervlies, wie es in Fig. 1 dargestellt ist). Als Gegenelektrode fungierte jeweils eine Kupfer-Streckmetall-Elektrode. In den Tabellen 1 bis 3 sind die Zusammensetzungen einer ersten, einer zweiten und einer dritten Mischung beschrieben, aus der die Elektroden abgeschieden wurden.

**Tabelle 1: Zusammensetzung der ersten Mischung**

| **Komponenten** | **Einwaage [g]** |
|---|---|
| Na-CMC | 0,25 |
| Graphit | 1,50 |
| Si-Pulver (Ø 50 nm) | 0,50 |
| Super P^{®} (Ruß) | 0,25 |
| Triethylcitrat | 0,30 |
| H₂O (demineralisiert) | 30,00 |

Zur Herstellung der ersten Mischung wurden das demineralisierte Wasser vorgelegt und das Na-CMC unter Rühren eingetragen. Anschließend erfolgte unter Rühren die Zugabe aller anderen Bestandteile.

Bei der anschließenden Herstellung von Elektroden durch elektrochemische Abscheidung aus der ersten Mischung fungierte der Kupferstromableiter als Anode. Die Temperatur der Mischung wurde auf 25 °C eingestellt. Die elektrochemische Abscheidung erfolgte bei einer Stromdichte von 6 mA/cm² für 120 s.

**Tabelle 2: Zusammensetzung der zweiten Mischung**

| **Komponenten** | **Einwaage [g]** |
|---|---|
| Na-CMC | 0,25 |
| Si-Pulver (Ø 50 nm) | 0,50 |
| Super P^{®} (Ruß) | 0,25 |
| Triethylcitrat | 0,30 |
| H₂O (demineralisiert) | 15,00 |

Die Herstellung der zweiten Mischung sowie die anschließende Herstellung von Elektroden durch elektrochemische Abscheidung aus der Mischung erfolgte grundsätzlich wie im Fall der ersten Mischung. Die elektrochemische Abscheidung erfolgte allerdings bei einer Stromdichte von 2 mA/cm² für 120 s.

**Tabelle 3: Zusammensetzung der dritten Mischung**

| **Komponenten** | **Einwaage [g]** |
|---|---|
| Na-CMC | 0,25 |
| Graphit | 4,50 |
| Super P^{®} (Ruß) | 0,25 |
| Triethylcitrat | 0,30 |
| H₂O (demineralisiert) | 30,00 |

Die Herstellung der dritten Mischung sowie die anschließende Herstellung von Elektroden durch elektrochemische Abscheidung aus der Mischung erfolgte grundsätzlich wie im Fall der ersten Mischung. Die elektrochemische Abscheidung erfolgte allerdings bei einer Stromdichte von 2 mA/cm² für 120 s.

### (2) Kathodische Abscheidung von Chitosan und Kompositmaterial

Im Folgenden wird die anodische Abscheidung von Elektroden aus einer vierten Mischung enthaltend Chitosan als Binder beschrieben. Die Abscheidung erfolgte auf einen Kupferstromableiter (POLYMET^{®} XII-1 Cu). Als Gegenelektrode fungierte eine Kupfer-Streckmetall-Elektrode. In Tabelle 4 ist die Zusammensetzung der Mischung beschrieben, aus der die Elektroden abgeschieden wurden.

**Tabelle 4: Zusammensetzung der vierten Mischung**

| **Komponenten** | **Einwaage [g]** |
|---|---|
| Chitosan | 0,25 |
| Graphit | 3,20 |
| Si-Pulver (Ø 50 nm) | 0,80 |
| Printex U^{®} (Ruß) | 0,50 |
| Ethylenglykol-Butylether | 5,00 |
| Polyvinylalkohol | 0,25 |
| HCL (30 %) | 0,20 |
| H₂O (demineralisiert) | 60,00 |

Zur Herstellung der vierten Mischung wurden 20 g des demineralisierten Wassers vorgelegt. Anschließend wurden 0,25 g Chitosan und 0,25 g Polyvinylalkohol (als Weichmacher) unter Rühren zugegeben und mit 0,2 g Salzsäure (30 %ig) versetzt. Nach Lösen des Chitosans wurde der Ruß zugegeben und die Mischung mit weiteren 10 g des demineralisierten Wassers versetzt. Anschlie-ßend erfolgte unter Rühren die Zugabe aller anderen Mischungsbestandteile. Der Ethylenglykol-Butylether diente dabei als Co-Solvent. Abschließend wurden nochmals 25 g des demineralisierten Wassers zugesetzt.

Bei der anschließenden Herstellung von Elektroden durch elektrochemische Abscheidung aus der vierten Mischung fungierte der Kupferstromableiter als Kathode. Die Temperatur der Mischung wurde auf 25 °C eingestellt. Die elektrochemische Abscheidung erfolgte bei einer Stromdichte von 6 mA/cm² für 120 s.

### (3) Vergleichsuntersuchungen

Eine erste Trockenmischung aus 5 Gewichtsanteilen Na-CMC, 5 Gewichtsanteilen Leitruß und 90 Gewichtsanteilen Graphit wurde in Wasser suspendiert (Gewichtsverhältnis Trockenmischung : Wasser = 1 : 6). Das Wasser enthielt 1 Gew.-% Triethylcitrat. Aus der resultierenden Lösung bzw. Suspension erfolgte eine elektrochemische Abscheidung auf einen Kupferstromableiter (POLYMET^{®} XII-1 Cu). Abgeschieden wurde über 120 Sekunden bei einer Stromdichte von ca. 2 mA/cm² und einer Temperatur von 25 °C.

Eine zweite Trockenmischung aus 5 Gewichtsanteilen Na-CMC, 5 Gewichtsanteilen Leitruß und 90 Gewichtsanteilen Graphit wurde in Wasser suspendiert (Gewichtsverhältnis Trockenmischung : Wasser = 1 : 4). Das Wasser enthielt 1 Gew.-% Triethylcitrat. Die resultierende Lösung wurde mittels eines Rakels beidseitig auf einen Kupferstromableiter (POLYMET^{®} XII-1 Cu) aufgebracht. Die Naßfilmstärke betrug auf jeder Seite ca. 150 µm.

Nach Trocknung wiesen die aus den beiden Verfahren resultierenden Elektroden vergleichbare Dicken auf, unterschieden sich aber in ihren elektrochemischen Eigenschaften. Die elektrochemisch abgeschiedenen Elektroden zeigten in Vergleichstests ein besseres Lade- und Entladeverhalten.

Eine Erklärung dafür findet sich in den in Fig. 2 und 3 dargestellten Querschnittsaufnahmen. Die durch elektrochemische Abscheidung hergestellten Elektroden wiesen im Vergleich zu den durch den Rakelprozess hergestellten Elektroden eine homogenere Verteilung des elektrochemisch aktiven Materials (der Graphitpartikel) auf. Insbesondere waren auf der Querschnittsaufnahme der gerakelten Elektrode zahlreiche Hohlräume im Inneren der Elektroden erkennbar. Ein Beispiel hierfür ist der in Fig. 2 zu erkennende, von den Fasern 1 bis 6 des Stromableiters gebildete Hohlraum. Derartige Hohlräume werden beim klassischen Aufrakeln nicht mit Elektrodenaktivmaterial gefüllt. Die durch elektrochemische Abscheidung hergestellte Elektrode weist im Gegensatz dazu keine vergleichbaren Hohlräume auf.

Durch eine nachgeschaltete Kalandrierung konnte das Lade- und Entladeverhalten beider Elektroden verbessert werden. Die Performance beider Elektroden glich sich bei diesem Prozess an.

## Patentansprüche

1. Verfahren zur Herstellung von Elektroden für Batterien, insbesondere für Lithium-lonen-Batterien, bei dem die Elektroden durch elektrochemische Abscheidung aus einer Mischung umfassend Partikel aus mindestens einem elektrochemisch aktiven Material, einen Binder und ein Lösungs- und/oder Dispergiermittel gebildet werden, **dadurch gekennzeichnet, dass** es sich bei dem Binder um ein Polysaccharid handelt.

2. Verfahren nach Anspruch 1, **dadurch gekennzeichnet, dass** die Partikel aus dem mindestens einen elektrochemisch aktiven Material und der Binder auf einem elektrisch leitfähigen Substrat abgeschieden werden.

3. Verfahren nach einem der Ansprüche 1 oder 2, **dadurch gekennzeichnet, dass** die elektrochemische Abscheidung aus der Mischung anodisch oder kathodisch erfolgt.

4. Verfahren nach einem der vorhergehenden Ansprüche, **dadurch gekennzeichnet, dass** die Elektroden aus einem wässrigen Medium abgeschieden werden.

5. Verfahren nach einem der vorhergehenden Ansprüche, **dadurch gekennzeichnet, dass** die Mischung das Lösungs- und/oder Dispergiermittel in einem Anteil zwischen 50 Gew.-% und 99 Gew.-%, bevorzugt zwischen 75 Gew.-% und 95 Gew.-%, enthält.

6. Verfahren nach einem der vorhergehenden Ansprüche, **dadurch gekennzeichnet, dass** es sich bei dem Polysaccharid um ein mit reaktiven Gruppen modifiziertes Polysaccharid, bevorzugt ein Zellulosederivat wie Carboxymethylzellulose (CMC), insbesondere Natriumcarboxymethylzellulose, oder ein Polyaminosaccharid wie Chitosan, handelt.

7. Verfahren nach einem der vorhergehenden Ansprüche, **dadurch gekennzeichnet, dass** die Mischung den Binder in einem Anteil zwischen 0,1 Gew.-% und 10,0 Gew.-%, bevorzugt zwischen 0,2 Gew.-% und 3,0 Gew.-%, besonders bevorzugt zwischen 0,3 Gew.-% und 2,0 Gew.-%, enthält.

8. Verfahren nach einem der vorhergehenden Ansprüche, **dadurch gekennzeichnet, dass** mindestens ein Teil der elektrochemisch aktiven Partikel in der Mischung Partikel aus einem kohlenstoffbasierten, Lithium interkalierenden Material und/oder aus einem Metall und/oder Halbmetall, welches mit Lithium eine Legierung ausbilden kann, sind.

9. Verfahren nach einem der Ansprüche 1 bis 6, **dadurch gekennzeichnet, dass** mindestens ein Teil der elektrochemisch aktiven Partikel in der Mischung Partikel aus einer Lithium-Metalloxid-Verbindung und/oder aus einer Lithium-Metallphosphat-Verbindung sind.

10. Verfahren nach einem der vorhergehenden Ansprüche, **dadurch gekennzeichnet, dass** die Mischung mindestens ein die elektrische Leitfähigkeit in der herzustellenden Elektrode erhöhendes Leitfähigkeitsadditiv enthält, insbesondere mindestens einen Zusatz aus der Gruppe mit Kohlenstoffnanoröhrchen (CNTs), Ruß und einem metallischen Zusatz.

11. Verfahren nach einem der vorhergehenden Ansprüche, **dadurch gekennzeichnet, dass** die Mischung mindestens einen Weichmacher, bevorzugt einen aliphatischen Polyester, insbesondere Triessigsäureglycerinester und/oder einen Hydroxycarbonsäureester, insbesondere Citronensäuretriethylester, enthält.

## Claims

1. A method for producing electrodes for batteries, in particular for lithium ion batteries, where the electrodes are formed by means of electrochemical deposition from a mixture comprising particles made of at least one electrochemically active material, a binder and a solvent and/or dispersing agent,
**characterized in that** the binder is a polysaccharide.

2. The method according to claim 1, **characterized in that** the particles made of the at least one electrochemically active material and the binder are deposited on an electrically conductive substrate.

3. The method according to any one of claims 1 or 2, **characterized in that** the electrochemical deposition from the mixture is effected anodically or cathodically.

4. The method according to any one of the preceding claims, **characterized in that** the electrodes are deposited out of an aqueous medium.

5. The method according to any one of the preceding claims, **characterized in that** the mixture contains the solvent and/or dispersing agent in a proportion between 50 weight percent and 99 weight percent, preferably between 75 weight percent and 95 weight percent.

6. The method according to any one of the preceding claims, **characterized in that** the polysaccharide is a polysaccharide modified with reactive groups, preferably a cellulose derivative such as carboxymethyl cellulose (CMC), in particular sodium carboxymethyl cellulose, or a polyaminosaccharide such as chitosan.

7. The method according to any one of the preceding claims, **characterized in that** the mixture contains the binder in a proportion between 0.1 weight percent and 10.0 weight percent, preferably between 0.2 weight percent and 3.0 weight percent, particularly preferred between 0.3 weight percent and 2.0 weight percent.

8. The method according to any of the preceding claims, **characterized in that** at least part of the electrochemically active particles in the mixture are particles made of a carbon-based, lithium intercalating material and/or of a metal and/or a semi-metal which can form an alloy together with lithium.

9. The method according to any one of claims 1 to 6, **characterized in that** at least part of the electrochemically active particles in the mixture are particles made of a lithium metal oxide compound and/or made of a lithium metal phosphate compound.

10. The method according to any one of the preceding claims, **characterized in that** the mixture contains at least one conductivity additive increasing the conductivity of the electrode to be produced, in particular at least one additive from the group consisting of carbon nanotubes (CNTs), carbon black and a metallic additive.

11. The method according to any one of the preceding claims, **characterized in that** the mixture includes at least one softener, preferably an aliphatic polyester, in particular glycerin triacetate and/or a hydroxycarboxylic acid ester, in particular triethyl citrate.

## Revendications

1. Procédé de fabrication d'électrodes pour des batteries, en particulier pour des batteries lithium-ion, dans lequel on forme les électrodes par dépôt électrochimique à partir d'un mélange comprenant des particules en au moins une matière électrochimiquement active, un liant et un solvant et/ou un dispersant, **caractérisé en ce que** le liant est un polysaccharide.

2. Procédé selon la revendication 1, **caractérisé en ce que** l'on dépose les particules de ladite au moins une matière électrochimiquement active et le liant sur un substrat électriquement conducteur.

3. Procédé selon l'une des revendications 1 ou 2, **caractérisé en ce que** l'on effectue le dépôt électrochimique à partir du mélange par voie anodique ou cathodique.

4. Procédé selon l'une quelconque des revendications précédentes, **caractérisé en ce que** l'on dépose les électrodes à partir d'un milieu aqueux.

5. Procédé selon l'une quelconque des revendications précédentes, **caractérisé en ce que** le mélange contient le solvant et/ou le dispersant en une proportion comprise entre 50 % en poids et 99 % en poids, de préférence entre 75 % en poids et 95 % en poids.

6. Procédé selon l'une quelconque des revendications précédentes, **caractérisé en ce que** le polysaccharide est un polysaccharide modifié avec des groupes réactifs, de préférence un dérivé de la cellulose comme la carboxyméthylcellulose (CMC), en particulier la carboxyméthylcellulose de sodium, ou un polyaminosaccharide comme le chitosane.

7. Procédé selon l'une quelconque des revendications précédentes, **caractérisé en ce que** le mélange contient le liant en une proportion comprise entre 0,1 % en poids et 10,0 % en poids, de préférence entre 0,2 % en poids et 3,0 % en poids, et de préférence encore entre 0,3 % en poids et 2,0 % en poids.

8. Procédé selon l'une quelconque des revendications précédentes, **caractérisé en ce qu'**au moins une partie des particules électrochimiquement actives dans le mélange sont des particules en une matière à base de carbone, une matière intercalant du lithium et/ou un métal et/ou un semi-métal, qui peut former un alliage avec le lithium.

9. Procédé selon l'une quelconque des revendications 1 à 6, **caractérisé en ce qu'**au moins une partie des particules électrochimiquement actives dans le mélange sont des particules en un composé lithium-oxyde de métal et/ou en un composé lithium-phosphate de métal.

10. Procédé selon l'une quelconque des revendications précédentes, **caractérisé en ce que** le mélange contient au moins un additif de conductibilité augmentant la conductibilité électrique dans l'électrode à fabriquer, en particulier au moins un additif choisi dans le groupe comprenant des nanotubes de carbone (CNT), le noir de carbone et un additif métallique.

11. Procédé selon l'une quelconque des revendications précédentes, **caractérisé en ce que** le mélange contient au moins un plastifiant, de préférence un polyester aliphatique, en particulier l'ester glycérique de l'acide triacétique et/ou un ester d'acide hydroxycarboxylique, en particulier le triéthylester de l'acide citrique.
